# EUROPEAN PATENT APPLICATION

(11) **EP 1 043 717 A2**
(43) Date of publication of application: **11.10.2000**
(21) Application number: 00302608.5
(22) Date of filing: 29.03.2000
(51) Int. Cl.: G11B 7/095

(54) **Optical disk apparatus**

(30) Priority: 07.04.1999 JP 10065799
(71) Applicant: SONY CORPORATION, Tokyo (JP)
(72) Inventor: Awata, Mitsuhiko, Shinagawa-ku, Tokyo (JP)
(74) Representative: Boden, Keith McMurray

(57) **Abstract**

An optical disk apparatus which incorporates an optical disk 10 and comprises an optical pickup 11, an angle-changing mechanism 16, and a drive shaft 17. The angle-changing mechanism 16 changes the angle between the recording surface of the optical disk 10 and the drive shaft 17. The apparatus has a jitter measuring circuit 14, a system controller 15, and a servo controller 12. The jitter measuring circuit 14 measures the jitter in a signal (RF signal) representing the data read from the optical disk 10. The system controller 15 generates an angle-correcting signal, which corrects the angle between the recording surface of the optical disk 10 and the drive shaft 17, thereby to optimize the jitter in the signal. The servo controller 12 drives the angle-changing mechanism 16 in accordance with the angle-correcting value generated by the system controller 15. Thus driven, the angle-changing mechanism 16 corrects the angle at which the drive shaft 17 is inclined to the recording surface of the optical disk 10.

## Description

The present invention relates to an optical disk apparatus comprising a mechanism for correcting the angle between the recording surface of an optical disk and the axis in which an optical head is moved in a radial direction of the disk.

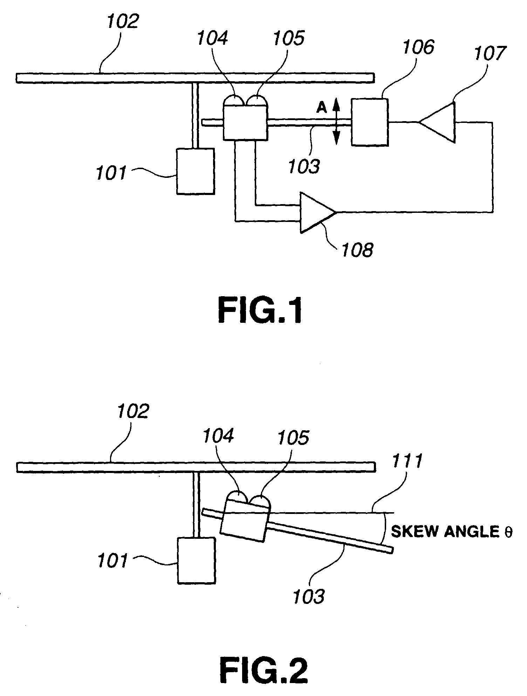

FIG. 1 is a schematic representation of the disk drive section and head drive section incorporated in a conventional optical-disk playback apparatus.

As may be seen from FIG. 1, an optical disk 102 is connected to the shaft of a spindle motor 101. The spindle motor 101 rotates the optical disk 102. An optical head, or optical pickup 104, is mounted on a drive shaft 103. The optical pickup 104 can move along the drive shaft 103. The drive shaft 103 extends parallel to the recording surface of the optical disk 102. The drive shaft 103 is a so-called thread shaft or a screw shaft. When rotated by a thread motor (not shown), the drive shaft 103 moves the optical pickup 104 in the radial direction of the optical disk 102.

It is desired that the recording surface of the optical disk 102 and the drive shaft 103 for driving the optical pickup 104 be parallel to each other. In other words, the shaft 103 should extend exactly parallel to the recording surface, as is indicated by an ideal shaft 111 in FIG. 2. In fact, however, a skew angle θ may develop between the recording surface of the disk 102 and the drive shaft 103 for driving the pickup 104, due to mechanical errors or the warping of the optical disk 102. This angle θ is generally known as "radial skew". In many cases, the disk 102 warps to different degrees at its center part and its circumferential part. Thus, the skew angle ( has a value at the center part of the disk 102 and another value at the circumferential part of the disk 102.

A skew angle θ, if developed between the recording surface of the disk 102 and the drive shaft 103 for driving the optical pickup 104, results in an increase of the jitter in the signal that the optical pickup 104 reproduces from the optical disk 102. That is, the signal reproduced from the disk 102 is deteriorated in quality. The jitter represents the quality of the signal reproduced or read from the optical disk 102. The greater the jitter, the lower the quality of the signal reproduced.

The conventional optical-disk playback apparatus has a radial skew sensor 105. The radial skew sensor 105 is mounted on the optical pick-tip 104. (The sensor 105 comprises one LED and two photodiodes and is designed to detect the inclination of the disk 102.) The skew angle θ detected by the radial skew sensor 105 is used to correct the angle at which the drive shaft 103 inclines to the recording surface of the optical disk 102.

More specifically, the conventional optical-disk playback apparatus has a unit for correcting the above-mentioned angle. The angle-correcting unit comprises an angle-changing mechanism 106, a drive signal generator 107 and a comparator 108. The mechanism 106 is provided to change the angle the shaft 104 has with respect to the recording surface of the disk 102, in the directions of arrows A shown in FIG. 1. The comparator 108 receives an angle signal from the radial skew sensor 105 and compares the angle signal with a reference signal, thereby outputting a control signal to the drive signal generator 107. The drive signal generator 107 generates a drive signal from the control signal. The drive signal is supplied to the angle-changing mechanism 106 and drives the mechanism 106. The angle-correcting unit performs skew servo-control, making the recording surface of the optical disk 102 and the drive shaft 103 for driving the optical pickup 104 parallel to each other and rendering the angles θ at the center and circumferential parts of the disk 102 equal to each other.

The angle-changing mechanism 106, which is not illustrated in detail, comprises gears, a motor for driving the gears and the like, which cooperate to move one end portion of the drive shaft 103 in the direction of arrow A shown in FIG. 1.

The conventional optical-disk playback apparatus shown in FIG. 1 is disadvantageous in the following respects.

First, the optical-disk playback apparatus needs to have the radial skew sensor 105 that detects the angle θ (i.e., radial skew angle) at all times the apparatus operates.

Secondly, the optical pickup 104 cannot be made smaller since has the radial skew sensor 105.

Thirdly, the optical-disk playback apparatus needs to have a servo circuit (including the comparator 108 and the drive signal generator 107) dedicated for applying a skew servo to the angle signal supplied from the radial skew sensor 105.

Because of these disadvantageous features, the manufacturing cost of the conventional optical-disk playback apparatus can hardly be reduced.

The present invention attempts to eliminate the disadvantages of the conventional optical-disk playback apparatus. That is, an aim of the present invention is to provide an optical disk apparatus which has a small optical pickup and can be manufactured at low cost.

An optical disk apparatus according to the invention includes a mechanism for correcting the angle between a recording surface of an optical disk and a drive shaft for moving an optical head in a radial direction of the optical disk. The apparatus comprises: jitter measuring means for measuring jitter contained in a signal which represents data reproduced from the optical disk; and angle-correcting value generating means for generating an angle-correcting value for correcting the angle between the recording surface of the optical disk and the drive shaft, thereby to optimize a jitter value. In the apparatus, the angle at which the drive shaft is inclined to the recording surface of the optical disk is corrected by the angle-correcting value generated by the angle-correcting value generating means.

In the optical disk apparatus of the invention, the angle between the recording surface of the optical disk and the drive shaft is corrected in accordance with the jitter in the signal representing the data read from the optical disk. Hence, the apparatus can generate a high-quality signal representing the data reproduced from the optical disk, i.e., a data signal containing but a small jitter, even if the optical disk undergoes physical warping.

As can be seen from the above, the jitter in a signal read from the optical disk is measured in the optical disk apparatus of the invention. An angle-correcting value for correcting the angle between the recording surface of the optical disk and the drive shaft is generated in order to optimize the jitter. The angle-correcting value is applied, thereby correcting the angle at which the drive shaft is inclined to the recording surface of the optical disk. Therefore, neither a radial skew sensor nor a servo circuit dedicated for the radial skew sensor are required. The optical pickup can be made small and compact, and the manufacturing cost of the apparatus can be reduced. Moreover, the apparatus can generate a high-quality signal representing the data reproduced from the optical disk, i.e., a data signal containing but a small jitter, even if the optical disk warps to different degrees at its center part and its circumferential part.

A preferred embodiment of the present invention will now be described hereinbelow by way of example only with reference to the accompanying drawings, in which:
FIG. 1 is a block diagram of a conventional optical-disk playback apparatus that comprises a radial skew sensor;
FIG. 2 is a diagram for explaining the skew angle between the recording surface of an optical disk and the drive shaft used in the apparatus of FIG. 1;
FIG. 3 is a block diagram of an optical-disk playback apparatus according to this invention;
FIG. 4 is a flow chart representing the algorithm for determining the motor position (inclination angle of the drive shaft) that is the most desirable for reducing jitter; and
FIG. 5 is a graph illustrating the relation between the jitter and the motor position.

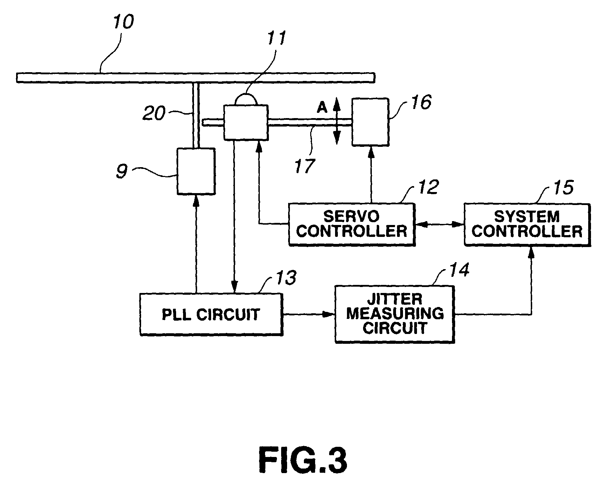

FIG. 3 is a schematic representation of an optical-disk playback apparatus, which is an embodiment of the optical disk apparatus according to this invention. In particular, FIG. 3 shows the disk-driving section and head-driving section of the optical-disk playback apparatus.

As shown in FIG. 3, an optical disk 10 is connected to a shaft 20, which in turn is connected to a spindle motor 9. Thus, the optical disk 10 can be rotated by the spindle motor 9. An optical head, or optical pickup 11, has an objective lens (not shown). The distance between the objective lens and the optical disk 10 is adjusted in accordance with the control signal supplied from a servo controller 12. That is, the focusing of the optical pickup 11 is servo-controlled. While being its focusing is being so controlled, the optical pickup 11 applies a laser beam to a prescribed track on the optical disk 10, receives the beam reflected from the disk 10 and converts the beam to an RF signal. The RF signal is supplied to a PLL circuit 13. The PLL circuit 13 controls the spindle motor 9 so that the optical disk 10 may have a prescribed linear speed at a data-reading position.

The optical pickup 11 is mounted on a drive shaft 17; it can move along the shaft 17. The drive shaft 17 is arranged parallel to the recording surface of the optical disk 10. The drive shaft 17 is a so-called thread shaft or a screw shaft. When rotated by a thread motor (not shown), the drive shaft 17 moves the optical pickup 11 in the radial direction of the optical disk 10.

The optical-disk playback apparatus of the invention further comprises an angle-changing mechanism 16. The mechanism 16 is designed to correct the radial skew angle θ between the recording surface of the optical disk 10 and the drive shaft 17. More precisely, the angle-changing mechanism 16 rotates the drive shaft 17 in one direction or the other indicated by arrows A shown in FIG. 3. In other words, the mechanism 16 inclines the drive shaft 17 to the recording surface of the optical disk 10. The mechanism 16 corrects the radial skew angle θ, rendering the drive shaft 17 nearly parallel to the recording surface of the disk 10. The angle θ is thereby made constant at both the center part of the disk 10 and the circumferential part thereof Though not shown in detail, the angle-changing mechanism 16 comprises a gear unit and an electric motor. The gear unit moves one end of the drive shaft 17 in one of the directions of arrows A (FIG. 3). The motor (e.g., a stepping motor) drives the gear unit.

The conventional optical-disk playback apparatus shown in FIG. 1 has a servo circuit (including components 108 and 107) that generates a skew servo signal from the angle signal supplied from the radial skew sensor 105. The optical-disk playback apparatus according to this invention has neither a servo circuit nor a radial skew sensor 105. The apparatus of the invention can yet correct the radial skew angle θ in the following way.

A PLL circuit 13 generates a binary RF signal. A jitter measuring circuit 14 detects the absolute value of the phase difference between the binary RF signal and a synchronizing clock signal. The phase difference detected is output, as jitter, to a system control 15. As indicated above, the jitter represents the quality of the signal reproduced or read from the optical disk 10. The greater the jitter, the lower the quality of the signal reproduced.

The system controller 15 causes the servo controller 12 to control the motor of the angle-changing mechanism 16, thereby optimizing the jitter supplied from the jitter measuring circuit 14. As a result, the radial skew angle θ between the recording surface of the optical disk 10 and the drive shaft 17 is corrected as is desired.

The servo controller 12, PLL circuit 13, jitter measuring circuit 14, system controller 15 are components that are incorporated in optical-disk playback apparatuses of the ordinary type. In the present invention, the skew angle is controlled by using these common components, without the necessity of employing any special components designed to correct the skew angle.

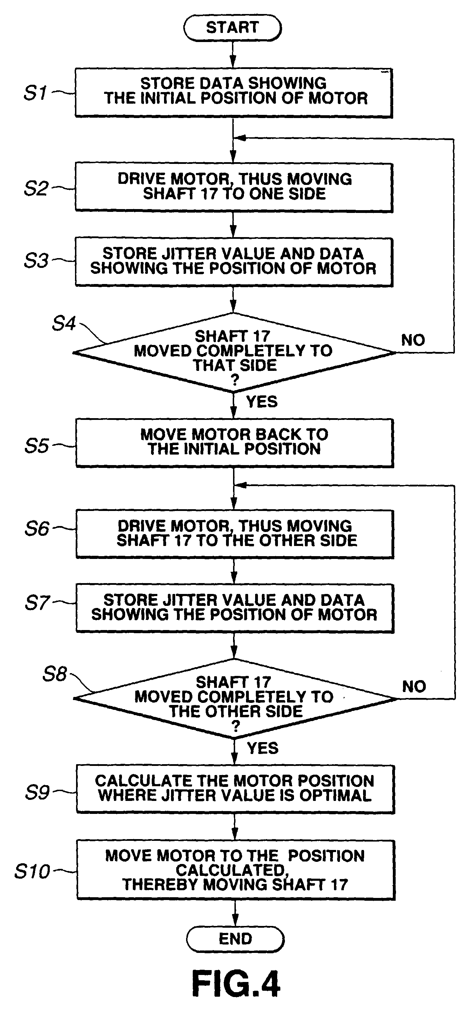

A method of correcting the angle between the recording surface of the optical disk 10 and the drive shaft 17 in the optical-disk playback apparatus of FIG. 3 will be described, with reference to the flow chart of FIG. 4. That is, it will be explained how the system controller 15 operates to correct the radial skew angle in the apparatus.

In Step 1, the system controller 15 stores the data representing the initial position of the motor of the angle-changing mechanism 16. The position the motor takes at this time (i.e., the stepping value of the stepping motor) corresponds to the angle between the recording surface of the optical disk 10 and the drive shaft 17 for moving the optical pickup 11. The initial position of the motor of the angle-changing mechanism 16 therefore corresponds to the initial value of the radial skew angle θ. The operation then goes from Step S1 to Step S2.

In Step S2, the system controller 15 drives the motor of the angle-changing mechanism 16, which moves the drive shaft 17 a little to one side, or in the direction of one of arrows A (FIG. 3). The angle between the recording surface of the optical disk 10 and the drive shaft 17 is thereby changed. The operation then goes from Step S2 to Step S3.

In Step S3, the system controller 15 reads the jitter value from the jitter measuring circuit 14 and stores the jitter value. The system controller 15 stores the present position (i.e., stepping value) of the motor of the angle-changing mechanism 16, too. The operation goes from Step S3 to Step S4.

In Step S4, the system controller 15 determines, from the jitter value or the present position of the motor, whether or not the angle-changing mechanism 16 has completely moved the drive shaft 17 to the side, in the direction of one of arrows A (FIG. 3). If it is determined in Step S4 that the mechanism 16 has not moved the shaft 17 completely, the flow returns to Step S2. In this case, the system controller 15 repeats Steps S2 and S3. In Step S2, the controller 15 drives again the motor of the angle-changing mechanism 16 a little. In Step S3, the controller 15 stores the jitter value and the position of the motor. If it is determined in Step S4 that the mechanism 16 has moved the drive shaft 17 completely, the flow goes to Step S5.

In Step S5, the system controller 15 makes the servo controller 12 move the position of the motor back to the initial position thereof. Thus, the angle of the drive shaft 17 is changed back to the initial value. The operation then goes from Step S5 to Step S6.

In Step S6, the system controller 15 controls the servo controller 13, which drives the motor of the angle-changing mechanism 16, a little in the reverse direction. The drive shaft 17 is thereby moved slightly to the direction indicated by the other of arrows A (FIG. 3). That is, the mechanism 16 changes the angle between the recording surface of the optical disk 10 and the drive shaft 17. The operation then goes from Step S6 to Step S7.

In Step S7, the system controller 15 reads the jitter value from the jitter measuring circuit 14 and stores the jitter value. The controller 15 stores the present position (i.e., stepping value) of the motor of the angle-changing mechanism 16, too. The operation goes from Step S7 to Step S8.

In Step S8, the system controller 15 the system controller 15 determines, from the jitter value or the present position of the motor, whether or not the angle-changing mechanism 16 has completely moved the drive shaft 17 to the other side, in the direction of the other of arrows A (FIG. 3). If it is determined in Step S4 that the mechanism 16 has not moved the shaft 17 completely, the flow returns to Step S6. In this case, the system controller 15 repeats Steps S6 and S7. In Step S6, the controller 15 drives again the motor of the angle-changing mechanism 16 a little. In Step S7, the controller 15 stores the jitter value and the position of the motor. If it is determined in Step S8 that the mechanism 16 has moved the drive shaft 17 completely to the other side, the flow goes to Step S9.

In Step S9, the system controller 15 calculates the position the motor of the angle-changing mechanism 16 must take to optimize the jitter, from the jitter values stored in Step S3 and Step S7. The position thus calculated corresponds to the angle that the drive shaft 17 should have to optimize the jitter. The operation then goes from Step S9 to Step S10.

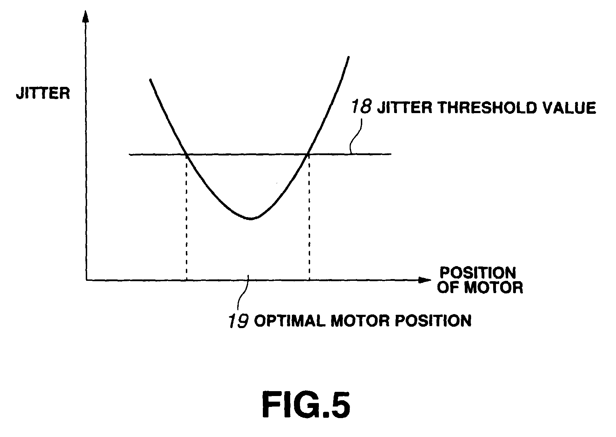

The relation between the jitter value and the motor position, both stored by the system controller 15 in Step S3 and Step S7, will be described with reference to FIG. 5. As can be understood from FIG. 5, the position 19 the motor takes to optimize the jitter value is the midpoint in the range over which the jitter value remains to exceed a threshold value 18. (This position 19 is not necessarily the one at which the jitter value is minimal

As shown in FIG. 4, the system controller 15 controls the servo controller 14, thereby causing the motor of the angle-changing mechanism 16 to the position in order to optimize the jitter value. The radial skew angle θ between the recording surface of the optical disk 10 and the drive shaft 17 is thereby corrected to the value that optimizes the jitter value.

The present invention is not limited to the embodiment described above. Rather, the optical-disk playback apparatus of FIG. 3 can be modified in various ways.

In a first modification of the apparatus shown in FIG. 3, an angle-correcting value (i.e., the value for changing the position of the motor incorporated in the angle-changing mechanism 16) is calculated before data is reproduced from the optical disk 10. The angle-correcting value is to change the radial skew angle to the value which optimizes the jitter value. To reproduce the data from the optical disk 10, the position of the motor is changed by the angle-correcting value thus calculated (i.e., the value for changing the position of the motor). Thereafter, data is reproduced from the optical disk 10.

In a second modification of the apparatus shown in FIG. 3, various angle-correcting values for optimizing the jitter value at a plurality of points in the radius of the optical disk 10 are calculated before data is reproduced from the optical disk 10. To reproduce the data from the optical disk 10, the angle-correcting values are sequentially applied, the first of which is either the value calculated for the point nearest the position where data is being reproduced or the value calculated for the point nearest the center or circumferential part of the optical disk 10.

In a third modification of the apparatus shown in FIG. 3, the angle-correcting value (i.e., the value for changing the position of the motor incorporated in the angle-changing mechanism 16) is calculated continuously, thereby continuously correcting the skew angle θ, throughout the process of reproducing data from the optical disk 10.

As has been described, the optical-disk playback apparatus according to the present invention need not have a radial skew sensor which is essential in conventional optical-disk playback apparatus. Hence, it does not require a servo circuit dedicated for applying a skew servo to an angle signal supplied from a radial skew sensor. With the optical-disk playback apparatus of the invention, it is therefore possible to render the optical pickup small and compact and to reduce the manufacturing cost of the apparatus. In addition, the apparatus can generate a high-quality signal representing data reproduced from an optical disk, i.e., a data signal containing but a small jitter, even if the optical disk warps to different degrees at its center part and its circumferential part.

## Claims

1. An optical disk apparatus including a mechanism for correcting the angle between a recording surface of an optical disk and a drive shaft for moving an optical head in a radial direction of the optical disk, said apparatus comprising:
jitter measuring means for measuring jitter contained in a signal which represents data reproduced from the optical disk; and
angle-correcting value generating means for generating an angle-correcting value for correcting the angle between the recording surface of the optical disk and the drive shaft, thereby to optimize a jitter value,
wherein the angle at which the drive shaft is inclined to the recording surface of the optical disk is corrected by the angle-correcting value generated by the angle-correcting value generating means.

2. An optical disk apparatus according to claim 1, wherein the angle-correcting value generating means is configured to calculate the angle-correcting value that optimizes the jitter value, and data is reproduced from the optical disk while applying the angle-correcting value thus calculated.

3. An optical disk apparatus according to claim 1, wherein the angle-correcting value generating means is configured to calculate various angle-correcting values that optimize the jitter value at a plurality of positions on the recording surface of the optical disk before data is reproduced from the optical disk, and the angle-correcting values thus calculated are sequentially applied, the first of which is either the value calculated for the point nearest the position where data is being reproduced or the value calculated for the point nearest a center or circumferential part of the optical disk, thereby to reproduce the data from the optical disk.

4. An optical disk apparatus according to claim 1, wherein the angle-correcting value generating means is configured to calculate continuously the angle-correcting value while data is being reproduced from the optical disk, and the data is reproduced from the optical disk by applying the angle correcting value calculated by the angle-correcting value generating means.
